# EUROPÄISCHE PATENTANMELDUNG

(11) **EP 0 524 381 A1**
(43) Veröffentlichungstag der Anmeldung: **27.01.1993**
(21) Anmeldenummer: 92107087.6
(22) Anmeldetag: 25.04.1992
(51) Int. Cl.: G01L 9/00

(54) **Mikrotechnisch hergestellte Sensorvorrichtung**

(30) Priorität: 22.07.1991 CH 2182/91
(71) Anmelder: Landis & Gyr Business Support AG, CH-6301 Zug (CH)
(72) Erfinder: Beat, Hälg, CH-7323 Wangs (CH)
(74) Vertreter: Müller, Hans-Jürgen, Dipl.-Ing.

(57) **Zusammenfassung**

Eine Sensorvorrichtung weist ein auf einem Substrat (1) angeordnetes, mechanisch schwingfähiges Element (3) auf, dessen Resonanzfrequenz (f) von der Wirkung einer äusseren Kraft (**K**) abhängig ist. Ein Sensor enthält wenigstens einen Resonator, der das aus einem magnetischen Material bestehende Element (3) und eine von einem Oszillator (8) gespeisten Spule (7) umfasst. Das Element (3) ist im magnetischen Wechselfeld (**B**) der Spule (7) angeordnet, damit der Resonator zum Schwingen angeregt werden kann. Die Frequenz des Oszillators (8) ist mit Mitteln (11) auf die Resonanzfrequenz (f) abstimmbar. Die Sensoren sind z. B. zur Messung von Druckwerten, magnetischen Feldstärken oder elektrischen Stromstärken verwendbar.

## Beschreibung

Die Erfindung bezieht sich auf eine Sensorvorrichtung der im Oberbegriff des Anspruchs 1 genannten Art.

Solche Einrichtungen eignen sich beispielsweise zum Messen von Druckwerten in Gas und Flüssigkeiten, von magnetischen Induktionswerten usw.

Nach K. E. Petersen "Silicon as a mechanical material" IEEE 70, No. 5 (1982), Seiten 420-457 weisen Balken aus einem Silizium-Material eine hohe Festigkeit auf und sind hervorragend als mechanische Biegeschwingelemente verwendbar. Sie lassen sich mittels in der IC-Technik bekannten Verfahren kostengünstig und in mikroskopisch kleinen Abmessungen auf einem Wafer herstellen, z. B. aus Silizium, Siliziumdioxid oder -nitrid.

Aus "Silicon Pressure Sensor Integrates Strain Gauge on Diaphragm" von K. Ikeda et al. (Sensors and Actuators A 21-A 23 [1990] Seiten 146-150) ist ein Drucksensor mit einer Membran in Mikrotechnik bekannt, auf der ein zweiseitig eingespannter Balken als Biegeschwinger im Feld eines Permanentmagneten angeordnet ist. Eine Durchbiegung der Membran verändert im Balken vorhandene mechanische Spannungen und verändert dessen Resonanzfrequenz. Der Balken weist zwei in seiner Längsrichtung angeordnete parallele Leiter auf. Ein im ersten Leiter fliessender Wechselstrom regt die Biegeschwingung an, während im zweiten Leiter eine Wechselspannung induziert wird. Sie ist proportional zur Schwingamplitude des Balkens, und dient zum Abstimmen der Frequenz des Wechselstroms auf die Resonanzfrequenz des Balkens. Die Herstellung dieses Drucksensors, der den Balken in einem evakuierten Hohlraum der Membran aufweist, beschreiben K. Ikeda et al. in Sensors and Actuators A 21-A 23 (1990) Seiten 1007-1010.

S. Bouwstra et al. berichten in "Resonating Microbridge Mass Flow Sensor" (Sensors and Actuators A 21-A 23 [1990] Seiten 332-335) über eine in Mikrotechnik hergestellte, zweiseitig eingespannte Brücke aus Siliziumnitrid, die sich zum Messen von Durchflussmengen eignet. Die Brücke wird mittels thermischen Impulsen zum Schwingen mit ihrer Resonanzfrequenz angeregt, die von der Temperatur der Brücke abhängig ist. Eine von der Durchflussmenge abhängige Abkühlung der Brücke ist mittels Wärme aus Heizelementen kompensierbar. Piezoelemente überwachen die Schwingamplitude.

Ein Magnetfeldsensor in Mikrotechnik ist in der EP-A 445 362 beschrieben. Die Wirkung eines äusseren Magnetfeldes biegt einen einseitig eingespannten Balken aus einem magnetischen Material durch. Die Durchbiegung wird mittels eines Fabri-Perot Interferometers gemessen.

Der Erfindung liegt die Aufgabe zugrunde, eine einfache und kostengünstige Sensorvorrichtung mit einem mechanisch schwingfähigen Element zu schaffen, das berührungslos zum Schwingen anregbar ist.

Die genannte Aufgabe wird erfindungsgemäss durch die Merkmale des Anspruchs 1 gelöst.

Die Erfindung besteht in den im Kennzeichen des Anspruchs 1 angegebenen Merkmalen. Vorteilhafte Ausgestaltungen ergeben sich aus den abhängigen Ansprüchen.

Nachfolgend werden Ausführungsbeispiele der Erfindung anhand der Zeichnungen näher erläutert.

Es zeigt:
- Figur 1: eine Sensorvorrichtung,
- Figur 2: einen Drucksensor in Form einer Membran mit zwei schwingfähigen Elementen und
- Figur 3: einen Sensor für ein äusseres Magnetfeld mit einer einseitig eingespannten Blattfeder.

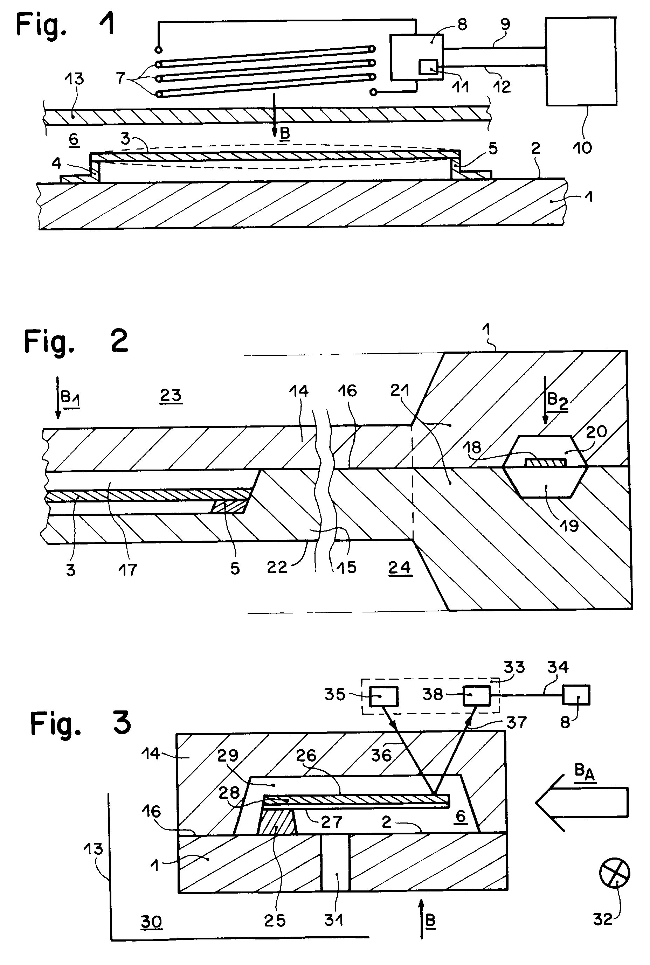

In der Figur 1 bedeutet 1 ein Substrat aus einem Halbleitermaterial. Auf einer Oberfläche 2 des Substrats 1 ist in einem parallelen Abstand ein Balken 3 als schwingfähiges Element angeordnet. Der Balken 3 ist beispielsweise an seinen beiden Enden mit Stützen 4 und 5 eingespannt und in einem vorbestimmten Abstand zur Oberfläche 2 geführt. Der Querschnitt des Balkens 3 ist so bemessen, dass er leicht zu Biegeschwingungen in seiner Längsachse anregbar ist. In der Zeichnung ist die Form der Grundschwingung des Balkens 3 senkrecht zur Oberfläche 2 mit gestrichelten Linen dargestellt, die die Durchbiegung des Balkens 3 in seiner Schwingungsebene zeigen. Ist der Querschnitt des Balkens 3 hochkant zur Oberfläche 2 angeordnet, schwingt der Balken 3 bevorzugt parallel zur Oberfläche 2.

Die Durchbiegung des Balkens 3 weist eine maximale Amplitude auf, wenn die Frequenz der periodischen Krafteinwirkung gerade seiner Resonanzfrequenz f entspricht. Beispielhaft wird die Grundschwingung des Balkens 3 angeregt. Die Resonanzfrequenz f hängt von der Masse des Balkens 3 pro Längeneinheit, von seiner Temperatur sowie von mechanischen Spannungen im Innern des Balkens 3 ab. Aendert sich die Masse, die Temperatur oder die mechanische Spannung durch eine äussere Einwirkung, z. B. einer Kraft **K**, verändert sich auch die Resonanzfrequenz f. Ein den Balken 3 umgebendes Medium 6, ein Gas oder eine Flüssigkeit, bedämpft die mechanische Schwingung des Balkens 3, wobei die Wirkung von der Dichte des Mediums 6 abhängig ist und die Güte des Biegeschwingers beeinflusst.

Besteht der Balken 3 wenigstens teilweise aus einem magnetischen Material, ist die periodische Krafteinwirkung mittels eines magnetischen Wechselfeldes **B** erzeugbar. Der Balken 3 ist auf diese Weise berührungslos in Schwingung versetzbar.

Das Wechselfeld **B** kann beispielhaft das Streufeld einer von einem Wechselstrom durchflossenen Spule 7 sein, die von einem geeigneten elektrischen Oszillator 8 gespeist wird. Die Spule 7 ist in einem vorbestimmten Abstand zum Balken 3 so angeordnet, dass das Wechselfeld **B** auf den Balken 3 einwirkt und die mechanische Biegeschwingung anregt. Vorzugsweise liegt die Zentralachse der Spule 7 in der Schwingungsebene des Balkens 3 und teilt ihn mit der gedachten Verlängerung der Zentralachse. Der Balken 3 kann innerhalb oder ausserhalb der Spule 7 angeordnet sein oder, wenn die Spule 7 in zwei Teilspulen mit einer gemeinsamen Zentralachse aufgeteilt ist, im Raum zwischen den beiden Teilspulen. Eine Anordnung des Balkens 3 und der Spule 7 bildet einen Resonator. Die Schaltung des Oszillators 8 kann als Induktivität direkt die Windungen der Spule 7 aufweisen.

Der Oszillator 8 ist über eine Speiseleitung 9 mit einem Speisegerät in einer Messeinrichtung 10 verbunden. Die Messeinrichtung 10 ist zur Messung der Leistungsaufnahme des Oszillators 8 und seiner Frequenz F eingerichtet.

Beispielsweise enthält die Schaltung des Oszillators 8 ein Abstimmittel 11, mit dem die Frequenz F des Oszillators 8 in einem vorbestimmten Frequenzbereich veränderbar ist. Solche Abstimmittel 11 sind manuell oder elektrisch veränderbare Kondensatoren oder Induktivitäten im Schwingkreis des Oszillators 8. Das Abstimmittel 11 und die Messeinrichtung 10 sind mit einer Abstimmleitung 12 verbunden, wobei das Abstimmittel 11 zum Empfang von Signalen eingerichtet ist, die über die Abstimmleitung 12 von der Messeinrichtung 10 gesendet werden. Beispielsweise kann das Abstimmittel 11 und der Oszillator 8 einen spannungsgesteuerten Oszillator (VCO) in einer "Phase-Locked Loop"-Schaltung bilden, die in "Halbleiter-Schaltungstechnik von U. Tietze und Ch. Schenk, Springer-Verlag, 1978, ISBN 3-540-08628-5, beschrieben ist. Die Messeinrichtung 10 ermöglicht ein gesteuertes Durchstimmen der Frequenz F über den ganzen vorbestimmten Frequenzbereich, wobei die Frequenz F, z. B. in kleinen Schritten, alle Werte des Frequenzbereichs annimmt.

Der Resonator entzieht dem Oszillator 8 Energie, wobei diese bei Resonanz am geringsten ist, d. h. wenn ein Vielfaches der Frequenz F des Oszillators 8 gerade mit der Resonanzfrequenz f des Resonators übereinstimmt. Die Messeinrichtung 10 kann die vom Oszillator 8 aus dem Speisegerät aufgenommene Leistung als Funktion der Frequenz F messen und während des Durchstimmens der Frequenz F ("frequency scanning") die Resonanzfrequenz f und die Güte Q⁻¹ bestimmen. Wird das Durchstimmen der Frequenz F periodisch wiederholt, sind auch Veränderungen der Resonanzfrequenz f und der Güte Q⁻¹ messbar.

Aendert sich durch einen physikalischen Vorgang die Masse, die Temperatur oder die mechanische Spannung des Balkens 3 bzw. die Dichte des Mediums 6, kann in der Messeinrichtung 10 in an sich bekannter Weise aus der Veränderung der Resonanzfrequenz f bzw. der Güte Q⁻¹ des Resonators ein Messignal abgeleitet und in Einheiten des physikalischen Vorgangs angezeigt werden. Ein Sensor, der aus dem Substrat 1 und wenigstens einem vom Wechselfeld **B** erregten schwingfähigen Element besteht, ist kostengünstig herstellbar.

Mit Vorteil ist der Sensor zum Schutz vor mechanischen äusseren Einwirkungen in einem Gehäuse mit Wänden 13 untergebracht. Bestehen die Wände 13 aus einem elektrisch schlecht leitenden Material, kann die Spule 7 ausserhalb des Gehäuses angeordnet sein, da das Wechselfeld **B** die Wände 13 durchdringt und keine Durchführungen für die Zuführungen zur Spule 7 benötigt werden. Die Wände 13 können auch zu einem das Medium 6 führenden Rohrsystem gehören, wenn Eigenschaften des Mediums 6 gemessen werden sollen.

Die Sensorvorrichtung weist den Vorteil auf, dass sowohl das Erregen des schwingfähigen Elementes im Sensor mittels eines magnetischen Wechselfeldes **B** als auch das Messen der Güte Q⁻¹ und der Resonanzfrequenz f ohne jede galvanische Verbindung zwischen der Spule 7 und dem Sensor erfolgt.

Das Substrat 1 in der Figur 2 umfasst einen Oberteil 14 und einen Unterteil 15, die an einer gemeinsamen Berührungsebene, einer Grenzschicht 16 z. B. mittels anodisch Bonden zusammengefügt sind. Im Substrat 1 sind schwingfähige Elemente in Ausnehmungen untergebracht, so dass das Gehäuse mit den Wänden 13 (Figur 1) durch das Substrat 1 selbst gebildet ist. Der Sensor kann aber in einem zusätzlichen Gehäuse mit den Wänden 13 untergebracht sein. Das Wechselfeld **B**₁ der hier nicht gezeigten Spule 7 (Figur 1) versetzt den Balken 3 in Schwingung.

Als Ausgangspunkt der Herstellung der beiden Teile 14, 15 dient vorzugsweise einkristallines Silizium, das in der IC-Technik üblichen Form als hochpolierte Wafer von etwa 0,5 mm Dicke kostengünstig zur Verfügung steht. Die Techniken für die mikromechanische Herstellung sind in der eingangs erwähnten Schrift von K. E. Petersen beschrieben.

Beispielhaft werden zuerst in das Unterteil 15 auf der für die Grenzschicht 16 vorgesehenen Oberfläche Hohlräume 17 für die Aufnahme der schwingfähigen Elemente eingeätzt. Das Material des Hohlraums 17 wird zunächst bis auf die Oberseite der Stützen 4 (Figur 1), 5 abgetragen, anschliessend wird das magnetische Material des Balkens 3 durch eine hier nicht gezeigte Maske auf den vorläufigen Boden des Hohlraums 17 abgeschieden. Die Maske begrenzt den Materialauftrag zwischen den beiden Stützen 4, 5 und legt die Breite des Balkens 3 fest. In einem weiteren Aetzschritt wird der Balken 3 zwischen den Stützen 4, 5 freigelegt und unterhalb des Balkens 3 der Boden des Hohlraums 17 auf die durch die Amplitude des Balkens 3 vorbestimmte Tiefe abgesenkt. Als Material für den Balken 3 eignet sich z. B. eine Nickel-Eisen-Legierung. Es ist auch möglich, den Balken 3 zweischichtig auszuführen, wobei beispielsweise die dem Unterteil 15 zugewandte Schicht aus hochfestem Siliziumdioxid besteht.

Der Sensor kann auch mehrere schwingfähige Elemente aufweisen, die z. B. auf die äusseren Einwirkungen unterschiedliche Empfindlichkeiten aufweisen. Beispielsweise ist im Substrat 1 ein weiterer Resonator angeordnet, der eine Lamelle 18 als zweites schwingfähiges Element und eine zweite, hier nicht gezeigte Spule 7 (Figur 1) umfasst. Die Lamelle 18 ist mittels eines zweiten magnetischen Wechselfeldes **B**₂ in Schwingungen versetzbar.

Direkt auf der für die Grenzschicht 16 vorgesehenen Oberfläche wird die Lamelle 18 aus dem magnetischen Material abgeschieden und anschiessend durch Aetzen freigelegt, bis im Unterteil 15 ein zum Schwingen der Lamelle 18 genügend grosser Unterraum 19 entsteht. Ebenso muss auf der für die Grenzschicht 16 vorgesehenen Oberfläche des Oberteils 14 ein Oberraum 20 eingeätzt werden, wobei die Lage des Oberraums 20 durch die Lage des zugehörigen Unterraums 19 bestimmt ist, damit nach dem Zusammenfügen der beiden Teile 14, 15 der zum Schwingen der Lamelle 18 nötige gemeinsame Raum 19, 20 entsteht. Aus verfahrenstechnischen Gründen kommt nur eine Variante für alle schwingfähigen Elemente eines Sensors zur Anwendung.

Beispielhaft misst das schwingfähige Element, der Balken 3 bzw. die Lamelle 18, in der Länge 0,8 mm und weist eine Breite von 15 µm und eine Dicke von 2 µm auf. Die Resonanzfrequenz f bzw. f' ist auf diese Abmessungen sehr empfindlich; typische Werte liegen im Bereich von 20 kHz bis 100 kHz.

Die grosse Präzision dieser Technik ermöglicht es, gleichzeitig eine Vielzahl von Oberteilen 14 bzw. Unterteilen 15 nebeneinander auf einem Waferstück herzustellen. Die so vorbereiteten Waferstücke werden auf der für die Grenzfläche 16 bestimmten Oberflächen so zusammengefügt, wobei immer das Oberteil 14 und das Unterteil 15 genau übereinander liegen. Anschliessend werden die einzelnen Sensoren getrennt.

Ist der Sensor der Sensorvorrichtung als Messgeber für einen Drucksensor vorgesehen, bildet das Substrat 1 einen in sich geschlossener Rahmen 21 mit einer darin aufgespannten Membran 22. Die Membran 22 trennt einen ersten Teilraum 23 oberhalb des Oberteils 16, der einen Druck p₁ aufweist, von einem zweiten Teilraum 24 unterhalb des Unterteils 17 mit dem Druck p₂. Vor dem Trennen der Drucksensoren schliesst sich nach dem Zusammenfügen der Teile 14, 15 noch ein beidseitiges Aetzen der jetzt freien Oberflächen des Substrats 1 im Bereich der Membranen 22 an, so dass die Membran 22 im Rahmen 21 geformt wird. Der Rahmen 21 und die Membran 22 bestehen aus dem Oberteil 14 und dem Unterteil 15, die zueinander weitgehend symmetrisch zur Grenzschicht 16 sind. Sie gehen an der als darstellerischen Gründen eingezeichneten gestrichelten Linie ohne Störung im Kristall des Substrats 1 nahtlos in einander über, so dass keine mechanischen Spannungen in der Membran 22 deren Lage beeinflussen.

Hier nicht gezeigte Masken begrenzen das Abätzen des Materials auf den Bereich der Membranen 22, wobei die Vertiefungen 17 auf je einem Durchmesser der Maskenausnehmung für jede Membran 22 liegt. Das Material wird so lange abgetragen, bis die Membranen 22 eine vorbestimmte Dicke von 5 bis 20 µm erreicht haben, ohne die Vertiefung 17 anzuschneiden. Die Dicke der Membran 22 ist der Tiefe der Vertiefung 17 entsprechend genügend gross zu wählen. Anschliessend werden die einzelnen Drucksensoren getrennt.

Der Drucksensor weist beispielhaft eine quadratische Form mit einer Seitenkante von 2,5 mm bei einer den Rahmen bestimmenden Dicke von 1 mm auf. Der Bereich der Membran 22 umfasst eine Fläche von etwa 1 bis 3 mm². Das Substrat 1 weist daher einen verwindungsfesten Rahmen 21 auf und kann auch bei einer von Null verschiedenen Druckdifferenz δp keine Kräfte auf die zweiseitig eingespannte Lamelle 20 übertragen.

Die Membran 22 erfährt durch die Druckdifferenz δp = p₁-p₂ in den beiden Teilräumen 23, 24 eine mechanische Durchbiegung, die ein Mass für die Druckdifferenz δp ist. Die Durchbiegung der Membran 22 überträgt über die Stützen 4 und 5 mechanische Kräfte **K** in den Balken 3 und verändert dessen inneren Spannungen bzw. die Resonanzfrequenz f. Die Messeinrichtung 10 (Figur 1) ist zum Umrechnen der gemessenen Resonanzfrequenz f in einen Wert der Druckdifferenz δp eingerichtet, der z. B. laufend auf einem hier nicht gezeigten Sichtgerät der Messeinrichtung 10 zur Anzeige gebracht werden kann.

Weist der Sensor nur einen einzigen Resonator auf, begrenzt ein von der Temperatur des Substrats 1 und des Balkens 3 abhängiger Fehler die Genauigkeit der Messung infolge einer zusätzlichen Verschiebung der Resonanzfrequenz f.

Der zweite Resonator, dessen Resonanzfrequenz f' nur von der Temperatur abhängig und in einem verwindungsfreien Teil des gleichen Substrats 1 angeordnet ist, kann mit Vorteil zur Kompensation des temperaturabhängigen Fehlers herangezogen werden. Weisen der Balken 3 und die Lamelle 18 dieselbe Konstruktion und fast gleiche Abmessungen auf, gestaltet sich die Kompensation besonders einfach, da die Differenz der beiden laufend gemessenen Resonanzfrequenzen f und f' das temperaturkompensierte Signal liefert. Zusätzlich gewinnt die Messeinrichtung 10 mit der Resonanzfrequenz f' ein der Temperatur des Substrats 1 proportionales Messignal.

Die Messeinrichtung 10 kann mit einem einzigen Oszillator 8 (Figur 1) auch beide Resonatoren erregen, wobei die beiden Wechselfelder **B**₁, **B**₂ von der gleichen Spule 7 ausgesendet werden, und beide Resonanzfrequenzen f und f' feststellen.

Beim anodisch Bonden verbinden sich die beiden Teile 14, 15 gasdicht miteinander. Die Umgebung des schwingfähigen Elementes bildet das Medium 6 (Figur 1) im Hohlraum 17 bzw. im gemeinsamen Raum 19, 20, der hermetisch von den Teilräumen 23, 24 abgeschlossen ist und mit Vorteil evakuiert wird, da sich die Güte Q⁻¹ der Resonatoren und die Genauigkeit des Messvorgangs markant verbessern. Eine verwendbare Technik beschreiben K. Ikeda et al. in der eingangs erwähnten Schrift auf den Seiten 1007-1010.

Das schwingfähige Element in der Figur 3 ist eine einseitig in einem Träger 25 eingespannte Blattfeder 26, die in einem vorbestimmten Abstand parallel zur Oberfläche 2 auf dem Substrat 1 angeordnet ist. Der Träger 25 verbindet die Blattfeder 26 mit der Oberfläche 2 und wird wie die Stützen 4, 5 (Figur 1) aus dem Silizium freigeätzt.

Die Blattfeder 26 bildet mit der hier nicht gezeigten Spule 7 (Figur 1) den Resonator, wobei die Spule 7 das Wechselfeld **B** erzeugt. Beispielhaft ist die Blattfeder 26 zweischichtig aufgebaut und besteht aus einer Unterlage 27 aus Siliziumdioxid und einer magnetischen Schicht 28. Die Unterlage 27 ist der Oberfläche 2 zugewandt und ist an dem einen Ende der Blattfeder 26 mit dem Träger 25 fest verbunden. Die magnetische Schicht 28 der Blattfeder ist auf der von der Oberfläche 2 abgewandten Seite der Unterlage 27 abgeschieden. Das Oberteil 14 weist an der Grenzschicht 16 eine Vertiefung 29 auf, die die Blattfeder 26 aufnimmt. Nach dem Bonden des Oberteils 14 auf das Substrat 1 ist die Vertiefung 29 hermetisch von einem Aussenraum 30 abgeschlossen und evakuierbar.

Die Vertiefung 29 kann beispielsweise über einen Kanal 31 im Substrat 1 oder, hier nicht gezeigt, im Oberteil 14 mit dem Aussenraum 30 verbunden sein, um beispielsweise den Druck im Aussenraum 30 über das Dämpfungsvermögen des Mediums 6 zu messen, das im Rohrsystem mit den Wänden 13 geführt ist.

Ist der Sensor in einem äusseren Magnetfeld **B**_{**A**} einer elektrischen Strom führenden Leiteranordnung 32 angeordnet, wirkt das Magnetfeld **B**_{**A**} mit der äusseren Kraft **K** zusätzlich auf die magnetische Schicht 27 des schwingfähigen Elementes des Resonators ein und verändert dessen Resonanzfrequenz f. Das äussere Magnetfeld **B**_{**A**} ändert sich im Vergleich zum magnetischen Wechselfeld **B** langsam, z. B. mit einer Frequenz im Bereich 0 Hz bis 10 kHz. Beispielsweise ist das äussere Magnetfeld **B**_{**A**} längs der Blattfeder 26 gerichtet und wirkt mit der äusseren Kraft **K** auf sie ein. Die Veränderung der Resonanzfrequenz f ist von der Stromstärke in der Leiteranordnung 32 und von der Distanz zur Leiteranordnung 32 abhängig. Die Messeinrichtung 10 (Figur 1) kann das Messignal in Einheiten der Stromstärke in der Leiteranordnung 32 umrechnen. Der Strom weist typisch eine Frequenz von 16^{²}/₃, 25, 50 oder 60 Hz auf.

Der Oszillator 8 kann vorteilhaft mittels Rückkopplung auf die Resonanzfrequenz f dauernd abgestimmt sein, wobei dessen Frequenz F den Zustand des Sensors unmittelbar widerspiegelt und sich die Messwerte kontinuierlich folgen. Der Oszillator 8 weist ein Rückkopplungsmittel 33 auf, das ein der Amplitude der Schwingung der Blattfeder 26 proportionales Rückkopplungssignal über die Verbindungsleitung 34 zum Oszillator 8 schickt. Als Mittel 33 kann eine hier nicht gezeigte Empfangsspule verwendet werden, in der das schwingfähige Element 3, 18 bzw. 26 eine induzierte Spannung erzeugt.

Vorteilhaft ist auch die Verwendung einer optischen Abtasteinrichtung als Mittel 33. Eine Lichtquelle 35 wirft einen Lichtstrahl 36 auf das schwingfähige Element 3, 18 bzw. 26 möglichst nahe des Schwingungsbauches. Mit der Schwingung moduliertes reflektiertes Licht 37 gelangt in einen Photodetektor 38, der das Licht 37 zum Rückkopplungssignal umwandelt.

Vorzugsweise wird infrarotes Licht 36, 37 verwendet, da das Silizium in diesem Bereich des Spektrums durchlässig ist. Die optische Abtasteinrichtung des Mittels 33 kann direkt im Oberteil 14 integriert sein oder im Ozillator 8, wobei zwischen dem Oszillator 8 und dem Sensor Lichtleiter verwendbar sind.

Die Form der schwingfähigen Elemente ist nicht auf den Balken 3 (Figur 2), die Lamelle 18 (Figur 2) und die Blattfeder 26 beschränkt, sondern sie kann alle Arten von schwingfähigen Elementen umfassen, z. B. eine ringsum eingespannte Membran, eine Stimmgabel, einen Biegeschwinger, der an mehr als zwei Stellen eingespannt ist usw., wobei diese Elemente wenigstens im Bereich des Schwingungsbauches eine magnetische Schicht 28 aufweisen.

## Patentansprüche

1. Sensorvorrichtung mit einem über einem Substrat (1) aus Halbleitermaterial angeordneten, mechanisch schwingfähigen Element (3; 18; 26), dessen Resonanzfrequenz (f; f') durch eine auf das Element (3; 18; 26) wirkende äussere Kraft (**K**) beeinflussbar ist, dadurch gekennzeichnet, dass das Element (3; 18; 26) aus einem magnetischen Material besteht, dass das Element (3; 18; 26) und eine mit einem Oszillator (8) verbundene Spule (7) einen Resonator bildet, dass das Element (3; 18; 26) im Streufeld der Spule (7) so angeordnet ist, dass das magnetische Wechselfeld (**B**; **B**₁; **B**₂) der Spule (7) das Element (3; 18; 26) in seiner Längsachse zu Biegeschwingungen anregt, und dass der Oszillator (8) Mittel (11) zum Abstimmen seiner Frequenz (F) auf die Resonanzfrequenz (f; f') aufweist.

2. Sensorvorrichtung nach Anspruch 1, dadurch gekennzeichnet, dass das Substrat (1) aus einem Oberteil (14) und einem Unterteil (15) gebildet ist, die einem Hohlraum (17; 19, 20; 29) umschliessend an einer gemeinsamen Berührungsebene (16) zusammengefügt sind, und dass das Element (3; 18; 26) in der Berührungsebene (16) im Hohlraum (17; 19, 20; 29) des Substrats (1) angeordnet ist.

3. Sensorvorrichtung nach Anspruch 1 oder 2, dadurch gekennzeichnet, dass der Hohlraum (17; 19, 20; 29) zur Verbesserung der Güte (Q⁻¹) des Resonators evakuiert ist.

4. Sensorvorrichtung nach einem der Ansprüche 1 bis 3, dadurch gekennzeichnet, dass das schwingfähige Element (3; 18) an beiden Enden mittels Stützen (4; 5) eingespannt und mit dem Substrat (1) verbunden ist.

5. Sensorvorrichtung nach einem der Ansprüche 1 bis 3, dadurch gekennzeichnet, dass das schwingfähige Element (26) mit dem einen Ende in einem Träger (25) eingespannt ist.

6. Sensorvorrichtung nach einem der Ansprüche 1 bis 5, dadurch gekennzeichnet, dass eine Messeinrichtung (10) mit dem Oszillator (8) verbunden ist, welche Mittel (11; 33) zum selbsttätigen Verändern der Frequenz (F) auf die Resonanzfrequenz (f; f') umfasst.

7. Sensorvorrichtung nach einem der Ansprüche 1 bis 6, dadurch gekennzeichnet, dass auf dem Substrat (1) wenigstens zwei Resonatoren angeordnet sind, dass ein zweiter Resonator eine von der Wirkung einer äusseren Kraft (**K**) isolierte schwingfähige Lamelle (18) und eine zweite Spule (7) aufweist und dass für die Kompensation der Temperaturabhängigkeit der ersten Resonanzfrequenz (f) die Messeinrichtung (10) zur Gewinnung einer Resonanzfrequenz (f') des zweiten Resonators eingerichtet ist.

8. Sensorvorrichtung nach einem der Ansprüche 1 bis 7, dadurch gekennzeichnet, dass der aus dem schwingfähigen Element (3; 26) und der Spule (7) bestehende Resonator zusätzlich in einem im Vergleich zum magnetischen Wechselfeld (**B**; **B**₁; **B**₂) langsam ändernden äusseren Magnetfeld (**B**_{**A**}) angeordnet ist, dass eine vom äusseren Magnetfeld (**B**_{**A**}) auf das Element (3; 26) erzeugte Kraft (**K**) ein Mittel zum Verändern der Resonanzfrequenz (f) des Resonators (3, 7; 3, 26) ist und dass die Veränderung der Resonanzfrequenz ein Mass für die Stärke des äusseren Magnetfelds (**B**_{**A**}) am Ort des Elements (3; 26) ist.

9. Sensorvorrichtung nach einem der Ansprüche 1 bis 7, dadurch gekennzeichnet, dass der aus dem schwingfähigen Element (3; 26) und der Spule (7) bestehende Resonator zusätzlich in einem im Vergleich zum magnetischen Wechselfeld (**B**; **B**₁; **B**₂) langsam ändernden äusseren Magnetfeld (**B**_{**A**}) angeordnet ist, dass eine vom äusseren Magnetfeld (**B**_{**A**}) auf das Element (3; 26) erzeugte Kraft (**K**) ein Mittel zum Verändern der Resonanzfrequenz (f) des Resonators (3, 7; 3, 26) ist, dass Mittel zur Erzeugung des externen Magnetfeldes (**B**_{**A**}) eine von einem Strom durchflossene Leiteranordnung (32) umfassen und dass die Veränderung der Resonanzfrequenz (f) ein Mass für die Stärke des in der Leiteranordnung (32) fliessenden elektrischen Stroms ist.

10. Sensorvorrichtung nach einem der Ansprüche 1 bis 4, dadurch gekennzeichnet, dass das Substrat (1) des Sensors eine flexible in einem verwindungsfreien Rahmen (21) aufgespannte Membran (22) bildet, die zwei Teilräume (23; 24) trennt, wobei im einen Teilraum (23) ein erster Druck (p₁) und im andern (24) ein zweiter Druck (p₂) herrscht, und dass die Membran (22) eine der Differenz (δp) der beiden Drücke (p₁; p₂) entsprechende Durchbiegung aufweist, die die mittels Stützen (4; 5) auf das Element (3) übertragene äussere Kraft (**K**) bewirkt und die Resonanzfrequenz (f) des Resonators (3, 7; 3, 26) verändert.
